# EUROPEAN PATENT APPLICATION

(11) **EP 4 712 393 A1**
(43) Date of publication of application: **18.03.2026**
(21) Application number: 24802529.8
(22) Date of filing: 16.01.2024
(51) Int. Cl.: H04L 5/00, H04L 47/52, H04L 47/70

(54) **MESSAGE SENDING METHOD, TARGET NODE, AND ELECTRONIC DEVICE**

(30) Priority: 11.05.2023 CN 202310534244
(71) Applicant: ZTE CORPORATION, Shenzhen, Guangdong 518057 (CN)
(72) Inventor: CHEN, Xiao, Shenzhen, Guangdong 518057 (CN); PENG, Shaofu, Shenzhen, Guangdong 518057 (CN)
(74) Representative: Ziebig Hengelhaupt Intellectual Property Attorneys Patentanwaltskanzlei PartGmbB
(86) International application number: PCT/CN2024/072562
(87) International publication number: WO 2024/230241

(57) **Abstract**

Disclosed in the present application are a message sending method, a target node, and an electronic device, belonging to the technical field of data communications. The method comprises: a target node reserving a first target outbound time slot for a target service within an orchestration period; after receiving a forwarding message of a target service stream, the target node converting, on the basis of a preset conversion strategy, the first target outbound time slot into a second target outbound time slot in a scheduling period; and the target node storing the forwarding message in a queue to be sent corresponding to the second target outbound time slot for sending.

## Description

### CROSS-REFERENCE TO RELATED APPLICATIONS

The present application claims priority to the Chinese patent application No. 202310534244.7 filed on May 11, 2023 to the CNIPA, and entitled "MESSAGE SENDING METHOD, TARGET NODE, AND ELECTRONIC DEVICE", the entire content of which is incorporated herein by reference.

### TECHNICAL FIELD

Embodiments of the present application relate to the technical field of data communications, in particular to a packet sending method, a target node, and an electronic device.

### BACKGROUND

The standard RFC8655 issued by the Internet Engineering Task Force (IETF) describes an architecture of a deterministic network and defines a quality of service (QoS) goal of deterministic forwarding. In order to achieve the QoS goal of deterministic forwarding, a transmission path of a service stream in the network may be pre-selected to ensure the stability of routing, and it does not change with real-time change of network topology.

In general, the deterministic path pre-selected for the service stream is a strictly explicit path calculated relying on a centralized controller, with resources reserved at nodes along the path to meet service level agreement (SLA) requirements of a deterministic service. Taking two adjacent nodes in a service transmission path as an example, an outgoing timeslot of an egress port of an upstream node is mapped to an ongoing sending timeslot of an egress port of a downstream node. Based on this mapping relationship, outgoing timeslot resources may be reserved for the service stream on the egress port of the downstream node, and a forwarding packet is sent sequentially in an outgoing timeslot of an egress port of each node in the deterministic path.

However, as an orchestration period is service oriented, a length of the orchestration period is usually large. If a node implements the same length of scheduling period on a forwarding plane, it will generate a large number of queue or buffer demands, even far exceeding the carrying capacity of the node. At this time, network congestion is prone to occurring, seriously affecting the forwarding efficiency of the packet.

### SUMMARY

Embodiments of the present application provide a packet sending method, a target node, and an electronic device to at least solve the problem in the related art that in a case where a length of an orchestration period is greater than a length of a scheduling period, the target node generates a large number of queue or buffer demands, which easily leads to network congestion and affects the forwarding efficiency of a packet.

In order to solve the above technical problems, the present application is implemented as follows.

In a first aspect, an embodiment of the present application provides a packet sending method, including: reserving, by a target node, a first target outgoing timeslot for a target service within an orchestration period, wherein a number of offset timeslots, relative to an ongoing sending timeslot of the target node, of the first target outgoing timeslot is less than a first number of timeslots contained in a scheduling period, and the target node is any node on a target path of a target service stream; converting, by the target node, the first target outgoing timeslot into a second target outgoing timeslot in the scheduling period based on a preset conversion strategy after receiving a forwarding packet of the target service stream; and storing, by the target node, the forwarding packet in a to-be-sent queue corresponding to the second target outgoing timeslot for sending.

In a possible implementation, converting, by the target node, the first target outgoing timeslot into the second target outgoing timeslot in the scheduling period based on the preset conversion strategy after receiving the forwarding packet of the target service stream includes: acquiring, by the target node, the first target outgoing timeslot corresponding to the forwarding packet in a case of receiving the forwarding packet of the target service stream; and converting the first target outgoing timeslot into the second target outgoing timeslot in the scheduling period based on the preset conversion strategy.

In a possible implementation, acquiring the first target outgoing timeslot corresponding to the forwarding packet includes: determining, based on a timeslot sequence number carried by the forwarding packet, the first target outgoing timeslot reserved by the target node for the target service stream within the orchestration period, wherein the timeslot sequence number corresponds to the first target outgoing timeslot.

In a possible implementation, acquiring the first target outgoing timeslot corresponding to the forwarding packet includes: determining an outgoing timeslot corresponding to the forwarding packet based on a pre-stored packet forwarding table entry; and determining the outgoing timeslot corresponding to the forwarding packet as the first target outgoing timeslot reserved by the target node for the target service stream within the orchestration period.

In a possible implementation, the preset conversion strategy includes: in a case where a second number of timeslots contained in the orchestration period is an integer multiple of the first number of timeslots, obtaining the second target outgoing timeslot by the first target outgoing timeslot modulo the first number of timeslots contained in the scheduling period.

In a possible implementation, reserving, by the target node, the first target outgoing timeslot for the target service within the orchestration period includes: acquiring timeslot resource information of the target node within the orchestration period, and first number of timeslots comprised in the scheduling period of the target node; reserving a target timeslot for the target service and determining a residence delay evaluated value corresponding to the target node based on a predetermined residence delay budget value corresponding to the target node, and the timeslot resource information; and determining the target timeslot as the first target outgoing timeslot reserved by the target node for the target service within the orchestration period in a case where a difference value between the residence delay budget value and the residence delay evaluated value is less than a preset threshold, and a number of offset timeslots, relative to the ongoing sending timeslot of the target node, of the target timeslot is less than the first number of timeslots, wherein the ongoing sending timeslot is used for indicating a timeslot in a sending state on an egress port of the target node.

In a possible implementation, acquiring the timeslot resource information of the target node within the orchestration period, and the first number of timeslots contained in the scheduling period of the target node includes: announcing the timeslot resource information of the target node within the orchestration period and length information of the scheduling period via an extended network protocol, wherein the length information is used for indicating the first number of timeslots contained in the scheduling period or a length of the scheduling period.

In a second aspect, an embodiment of the present application provides a target node. The target node is any node on a target path of a target service stream and includes: a timeslot reserving module, configured to reserve a first target outgoing timeslot for a target service within an orchestration period, wherein a number of offset timeslots, relative to an ongoing sending timeslot of the target node, of the first target outgoing timeslot is less than a first number of timeslots comprised in a scheduling period; a timeslot converting module, configured to convert, the first target outgoing timeslot into a second target outgoing timeslot in the scheduling period based on a preset conversion strategy after receiving a forwarding packet of the target service stream; and a packet storing module, configured to store the forwarding packet in a to-be-sent queue corresponding to the second target outgoing timeslot for sending.

In a third aspect, an embodiment of the present application provides an electronic device, including a processor and a memory, wherein the memory stores at least one computer program, and the at least one computer program is loaded and executed by the processor to implement the above packet sending method.

In a fourth aspect, an embodiment of the present application provides a computer-readable storage medium, storing at least one computer program therein, wherein the computer program is loaded and executed by a processor to implement the above packet sending method.

It should be understood that the above general description and the following detailed description are merely exemplary and explanatory, and cannot limit the present application.

### BRIEF DESCRIPTION OF DRAWING(S)

Accompanying drawings here, which are incorporated in and constitute a part of this specification, illustrate embodiments consistent with the present application and together with the specification, serve to explain the principles of the present application.
FIG. 1 shows a schematic flowchart of a packet sending method provided by embodiments of the present application.
FIG. 2 shows a schematic structural diagram of a network provided by embodiments of the present application.
FIG. 3 shows a schematic diagram of conversion between a timeslot in an orchestration period and a timeslot in a scheduling period provided by embodiments of the present application.
FIG. 4 shows a schematic structural diagram of an extended network protocol provided by embodiments of the present application.
FIG. 5 shows a schematic diagram of an offset relationship between a burst volume (or sub burst volume) of a service and an orchestration period provided by embodiments of the present application.
FIG. 6 shows a schematic diagram of a timeslot mapping relationship between two adjacent upstream and downstream nodes provided by embodiments of the present application.
FIG. 7 shows a schematic structural diagram of a target node provided by embodiments of the present application.
FIG. 8 shows a schematic structural diagram of an electronic device provided by embodiments of the present application.

### DETAILED DESCRIPTION

Exemplary embodiments will be illustrated in detail here, examples of which are represented in accompanying drawings. When the following descriptions refer to the accompanying drawings, the same number in the different accompanying drawings represents the same or similar elements unless otherwise indicated. The implementations described in the following exemplary embodiments do not represent all implementations consistent with the present application. On the contrary, they are merely examples of an apparatus and method consistent with some aspects of the present application as detailed in the appended claims.

In the personal draft published by IETF, it is mentioned that at an ingress node of a network, corresponding outgoing timeslot resources need to be reserved on an egress port for service streams with corresponding arrival moments; and at an intermediate node in the network, corresponding outgoing timeslot resources are reserved on the egress port for service streams with corresponding incoming timeslots. Taking two adjacent nodes in a service transmission path as an example, an outgoing timeslot of an egress port of an upstream node is mapped to an ongoing sending timeslot of an egress port of a downstream node. Based on this mapping relationship, outgoing timeslot resources may be reserved for the service stream on the egress port of the downstream node, and a forwarding packet is sent sequentially in an outgoing timeslot of an egress port of each node in the deterministic path.

For the convenience of understanding the embodiments of the present application, the relevant terms are explained as follows.

Timeslot: a minimum unit of time-division multiplexing that needs to be designed with a reasonable value, such as 10 us, to be able to at least send one complete packet.

Incoming timeslot: for a certain intermediate node in a specific path, a timeslot contained in a packet received by the intermediate node from an upstream node (i.e., an outgoing timeslot of the upstream node) is its incoming timeslot.

Outgoing timeslot: for a certain intermediate node in a specific path, when continuing to send a packet to a downstream node, the intermediate node selects to send the packet in a designated timeslot according to resource reservation or certain rules, and this timeslot is called the outgoing timeslot.

Ongoing sending timeslot: for a head node in a path, the head node continues to send a packet received from a client side to a downstream node; and when the packet arrives at an egress port, at the moment, a timeslot in which the egress port is currently in a sending state is the ongoing sending timeslot. For an intermediate node in the path, the intermediate node continues to send a packet received from an upstream node to the downstream node; and when the end of an incoming timeslot to which the packet belongs arrives at the egress port, at the moment, a timeslot in which the egress port is currently in a sending state is the ongoing sending timeslot. Please note that the ongoing sending timeslot is not an outgoing timeslot.

Scheduling period: a cyclic period of a time-division multiplexing scheduling mechanism implemented by a network node, including a fixed number of timeslots. For example, one scheduling period fixedly contains 100 timeslots.

Service burst interval: a traffic specification for a deterministic service stream generally follows the generation of a certain burst volume within a cyclic burst interval (i.e., service burst interval). For example, if a certain service stream generates 1000 bits of traffic every 1 ms, the corresponding service burst interval is 1 ms.

Orchestration period: an orchestration period adopted by a control plane according to requirements of all deterministic services. Timeslot resources are allocated to services within the orchestration period, namely which timeslots in the orchestration period are occupied by the services and how many bits are occupied within the timeslots. The orchestration period is usually an integer multiple of a scheduling period, or equal to the scheduling period.

Due to the fact that the orchestration period is service oriented, that is, the control plane determines the orchestration period according to service burst intervals of all deterministic services and a discrete burst volume within each service burst interval, and for some deterministic services, the service burst interval is very large, a length of the determined orchestration period is much greater than a length of the scheduling period. If a node implements a scheduling period of the same length on a forwarding plane, it will generate a large number of queue or buffer demands, even far exceeding the carrying capacity of the node. At this time, network congestion is prone to occurring, seriously affecting the forwarding efficiency of the packet.

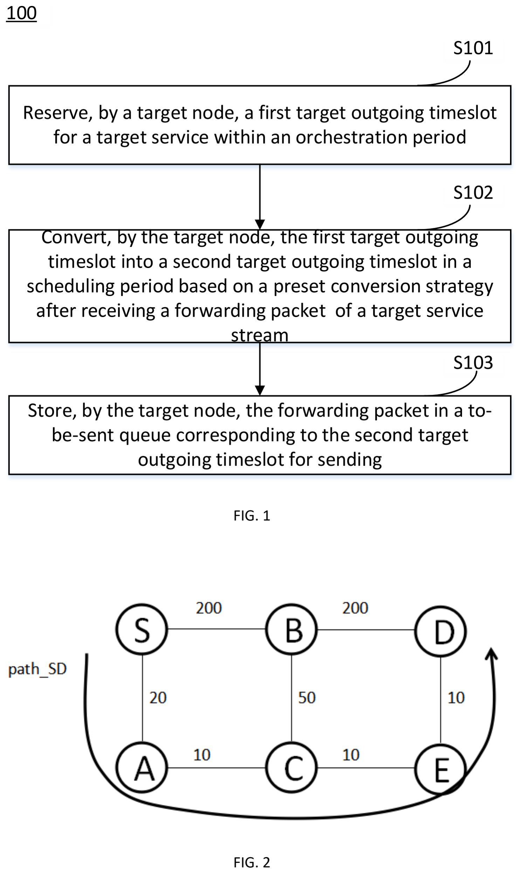

Based on this, embodiments of the present application provide a packet sending method to save queue or buffer demands of a target node, reduce the possibility of network congestion, and improve the forwarding efficiency of a packet. FIG. 1 shows a schematic flowchart of a packet sending method provided by embodiments of the present application. As shown in the figure, the packet sending method 100 may include the following steps.

At S101, a target node reserves a first target outgoing timeslot for a target service within an orchestration period.

The number of offset timeslots, relative to an ongoing sending timeslot of the target node, of the first target outgoing timeslot is less than the first number of timeslots contained in a scheduling period, and the target node is any node on a target path of a target service stream.

At S102, after receiving a forwarding packet of the target service stream, the target node converts the first target outgoing timeslot into a second target outgoing timeslot in the scheduling period based on a preset conversion strategy.

At S103, the target node stores the forwarding packet in a to-be-sent queue corresponding to the second target outgoing timeslot for sending.

Through the above steps, the target node first reserves the first target outgoing timeslot for the target service within the orchestration period. The number of offset timeslots, relative to the ongoing sending timeslot of the target node, of the first target outgoing timeslot is less than the first number of timeslots contained in the scheduling period. That is to say, in the process of reserving the outgoing timeslot, the target node considers not only the number of offset timeslots, relative to the ongoing sending timeslot of the target node, of the first target outgoing timeslot, so that a residence delay evaluated value determined according to the number of offset timeslots satisfies a residence delay budget value corresponding to the target node, but also the number of timeslots in the scheduling period, wherein the number of offset timeslots is less than the number of timeslots in the scheduling period.

Then, after receiving the forwarding packet of the target service stream, the target node converts the first target outgoing timeslot into the second target outgoing timeslot in the scheduling period based on the preset conversion strategy, and stores the forwarding packet in the to-be-sent queue corresponding to the second target outgoing timeslot for sending. In this way, even if a service burst interval is very large, causing the length of the orchestration period to be much greater than the length of the scheduling period, there are still very few queues maintained on the target node., which can reduce the buffer demands of the target node and improve the forwarding efficiency of the packet.

In a possible implementation, in S102, converting, by the target node, the first target outgoing timeslot into the second target outgoing timeslot in the scheduling period based on the preset conversion strategy after receiving the forwarding packet of the target service stream includes that: the target node acquires the first target outgoing timeslot corresponding to the forwarding packet in a case of receiving the forwarding packet of the target service stream; and converts the first target outgoing timeslot into the second target outgoing timeslot in the scheduling period based on the preset conversion strategy.

Illustration is made in conjunction with examples. FIG. 2 shows a schematic structural diagram of a network provided by embodiments of the present application. As shown in the figure, the network includes six nodes: node S, node A, node C, node E, node D, and node B. A link between every two of the nodes is a bidirectional link. Within a control plane, a centralized controller or a head node of a path may calculate an end-to-end target path of a target service stream. In some cases, the target path of the target service stream may be determined by: acquiring a delay demand quantity of the target service stream and timeslot resource information of each egress port of each node; determining at least one candidate path corresponding to the target service stream based on the timeslot resource information of each egress port of each node; reserving a timeslot resource for the target service stream on egress ports of candidate nodes in each candidate path, and determining a total residence delay evaluated value of the target service stream on the candidate path; and then selecting a candidate path satisfying a first condition as the target path of the target service stream, wherein the first condition includes that the timeslot resource is successfully reserved for the target service stream on the egress ports of all the candidate nodes that make up the selected candidate path, and a sum of the total residence delay evaluated value and an accumulated link propagation delay of the selected candidate path satisfies the delay demand quantity.

After the target path is successfully calculated and takes effect, if the target path is path_SD and passes through S-A-C-E-D, a forwarding packet of the target service stream is forwarded along the target path path_SD. For any node on the target path of the target service stream, a first target outgoing timeslot corresponding to the forwarding packet is acquired in a case of receiving the forwarding packet of the target service stream, wherein the first target outgoing timeslot is pre-reserved for the target service stream; and the first target outgoing timeslot is converted into a second target outgoing timeslot in a scheduling period based on a preset conversion strategy.

The first target outgoing timeslot corresponding to the forwarding packet may be acquired using the following two implementations.

In a first implementation: based on a timeslot sequence number carried by the forwarding packet, the first target outgoing timeslot reserved by the target node for the target service stream within the orchestration period is determined, wherein the timeslot sequence number corresponds to the first target outgoing timeslot.

In a second implementation: an outgoing timeslot corresponding to the forwarding packet is determined based on a pre-stored packet forwarding table entry; and the outgoing timeslot corresponding to the forwarding packet is determined as the first target outgoing timeslot reserved by the target node for the target service stream within the orchestration period.

The scheduling period implemented by the target node on a forwarding plane is not completely equivalent to the orchestration period of the control plane. As the orchestration period is service oriented, the length of the orchestration period is often much greater than the length of the scheduling period. Therefore, the corresponding conversion strategy is used to convert the first target outgoing timeslot into the second target outgoing timeslot in the scheduling period, the packet is stored in a queue or buffer corresponding to the second target outgoing timeslot, and finally the packet is sent in the second target outgoing timeslot. In a possible implementation, the preset conversion strategy includes: in a case where the second number of timeslots contained in the orchestration period is an integer multiple of the first number of timeslots contained in the scheduling period, the second target outgoing timeslot is obtained by that the first target outgoing timeslot modulo the first number of timeslots. That is, in the case where the second number of timeslots contained in the orchestration period is an integer multiple of the first number of timeslots, timeslot conversion is performed using the following formula:

### Second target outgoing timeslot = first target outgoing timeslot % M

Where, % is the modulo operation, and M is the number of timeslots contained in the scheduling period.

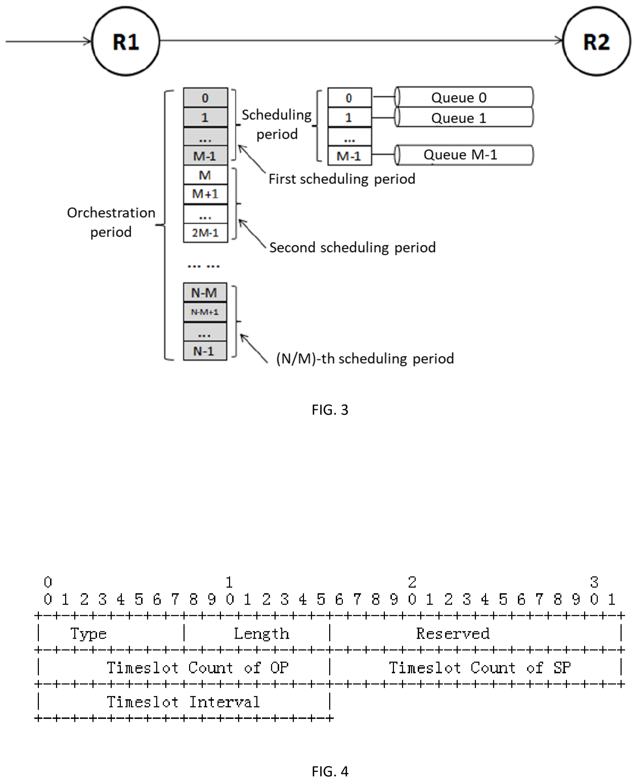

Illustration is made in conjunction with specific examples. FIG. 3 shows a schematic diagram of conversion between a timeslot in an orchestration period and a timeslot in a scheduling period provided by embodiments of the present application. As shown in the figure, for an egress port of node R1 (which is connected to node R2), the number N of timeslots contained in the orchestration period is an integer multiple of the number M of timeslots contained in the scheduling period. That is, the orchestration period contains multiple scheduling periods. In the orchestration period, timeslot 0 to timeslot M-1 is denoted as the first scheduling period, timeslot M to timeslot 2M-1 is denoted as the second scheduling period, and so on; and timeslot N-M to timeslot N-1 is denoted as the (N/M)-th scheduling period. Each timeslot in the scheduling period corresponds to one associated queue (or buffer) for storing a packet, so as to send the packet in the corresponding timeslot. In this way, even if a service burst interval is very large, and the length of the orchestration period is much greater than the length of the scheduling period, there are still very few queues maintained on the target node., which can reduce the buffer demands of the target node and improve the forwarding efficiency of the packet.

The following is an explanation of a process of determining a target path that meets specific delay requirements for the target service stream on the control plane, and reserving a target timeslot on the egress port along the target path.

As mentioned earlier, in the control plane, the centralized controller or the head node of the path calculates an end-to-end target path for the target service stream, a timeslot resource is successfully reserved for the target service stream on egress ports of all target nodes of the target path, and the sum of the total residence delay evaluated value and the accumulated link propagation delay of the selected candidate path satisfies the delay demand quantity.

Taking the network structure in FIG. 2 as an example, it is assumed that an end-to-end delay required for the target service stream is 200 us. The centralized controller or the head node S first determines a candidate path path_SD, passing through nodes S-A-C-E-D. The accumulated link propagation delay of the current candidate path is: 20 us + 10 us + 10 us + 10 us=50 us. A difference value between the delay demand quantity of the target service stream and the accumulated link propagation delay is determined as a total residence delay budget value of all candidate nodes in the candidate path, which is 200 us - 50 us=150 us. Assuming that according to a mean budget method, the candidate nodes will share a residence delay budget value of 150/5=30 us.

In a direction from the head node S to the end node D of the candidate path path_SD, the timeslot resource is reserved for the target service stream on the egress port of each candidate node in sequence. For each candidate node, a target timeslot is reserved for the target service stream according to the timeslot resource information of the egress port of the candidate node and the residence delay budget value of the candidate node determined from the above step, and the residence delay evaluated value corresponding to the candidate node is determined. Furthermore, when the timeslot resource is successfully reserved for the target service stream on the egress ports of all the candidate nodes in the candidate path path_SD and the sum of the total residence delay evaluated value and the accumulated link propagation delay of the selected candidate path satisfies the delay demand quantity of the target service stream, the candidate path path_SD is determined as the target path of the target service stream, and all the candidate nodes contained in the target path are determined as the target nodes. At this point, the path path_SD is successfully calculated and takes effect.

In a possible implementation, reserving, by the target node, the first target outgoing timeslot for the target service within the orchestration period includes the following steps.

At Step 1011, timeslot resource information of the target node within the orchestration period, and the first number of timeslots contained in the scheduling period of the target node are acquired.

At Step 1012, based on a predetermined residence delay budget value corresponding to the target node and the timeslot resource information, a target timeslot is reserved for the target service, and a residence delay evaluated value corresponding to the target node is determined.

At Step 1013, in a case where a difference value between the residence delay budget value and the residence delay evaluated value is less than a preset threshold, and where the number of offset timeslots, relative to the ongoing sending timeslot of the target node, of the target timeslot is less than the first number of timeslots, the target timeslot is determined as the first target outgoing timeslot reserved by the target node for the target service within the orchestration period, where the ongoing sending timeslot is used for indicating a timeslot in a sending state on an egress port of the target node.

Through the above steps, since the orchestration period of the target node is much greater than the scheduling period, in the process that the target node reserves the target timeslot for the target service stream, the target node not only needs to meet the requirement that the difference value between the residence delay budget value and the residence delay evaluated value is less than the preset threshold, but also needs to meet the requirement that the number of offset timeslot, relative to the ongoing sending timeslot of the target node, of the target timeslot is less than the first number of timeslots.

Different target nodes may announce the timeslot resource information of the egress port and the first number of timeslots contained in the scheduling period to each other. That is, in step 1011, acquiring the timeslot resource information of the target node within the orchestration period, and the first number of timeslots comprised in the scheduling period of the target node includes that: the timeslot resource information of the target node within the orchestration period and length information of the scheduling period are announced via an extended network protocol, where the length information is used for indicating the first number of timeslots contained in the scheduling period or the length of the scheduling period.

During implementations, an Interior Gateway Protocol (IGP) may be extended, Open Shortest Path First (OSPF) or other similar protocols may be extended, and a Border Gateway Protocol-Link State (BGP-LS protocol) or other similar protocols may be extended to support the announcement of delay resource information of the egress port. An ISIS protocol set (referring to RFC5305, RFC5311, RFC5316, RFC5120) has defined TLVs 22/23/141/222/223 for announcing an adjacency relationship. The embodiment of the present application newly adds a Sub-TLV, denoted as Timeslot Scheduling Capability Sub-TLV, to these TLVs for carrying the timeslot resource information of the egress port and the first timeslot count contained in the scheduling period. FIG. 4 shows a schematic structural diagram of an extended network protocol provided by embodiments of the present application. As shown in the figure, the extended network protocol includes the following fields.

Type: occupying 1 byte, whose value is to be allocated by the Internet Assigned Numbers Authority (IANA) to represent that this TLV is Timeslot Scheduling Capability Sub-TLV.

Length: occupying 1 byte and representing a content length of this TLV (excluding the fields Type and Length themselves).

Timeslot Count of OP: occupying 2 bytes and representing the timeslot count (N) contained in an orchestration period. These timeslots are numbered in sequence from 0 to N-1.

Timeslot Count of SP: occupying 2 bytes and representing the timeslot count (M) contained in a scheduling period. These timeslots are numbered in sequence from 0 to M-1.

Timeslot Interval: occupying 2 bytes and representing a length of each timeslot, in units of microseconds (us).

It should be noted that in other extension methods, the timeslot interval may be represented in milliseconds (ms) or nanoseconds (ns), or the length of the orchestration period or the scheduling period may be represented in time units.

By parsing the extended network protocol mentioned above, the timeslot resource information of the target node within the orchestration period, and the number of first timeslots contained in the scheduling period of the target node are acquired.

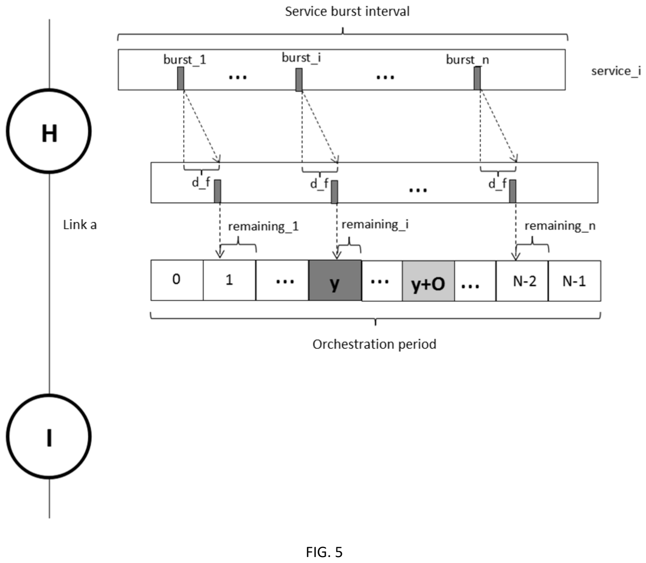

Then, based on the predetermined residence delay budget value corresponding to the target node and the timeslot resource information, the target timeslot is reserved for the target service, and the residence delay evaluated value corresponding to the target node is determined. Illustration is made in conjunction with specific examples. FIG. 5 shows a schematic diagram of an offset relationship between a burst volume (or sub burst volume) of a service and an orchestration period provided by embodiments of the present application. As shown in the figure, when the target node is a head node, the head node H reserves a target timeslot for each target burst volume contained in the target service stream within the orchestration period upon receiving the target service stream. Here, the target service stream is periodic traffic, and its service burst interval is equal to the length of the orchestration period of the head node after being extended, so that the head node receives the same target service stream within each orchestration period. In the figure, it is assumed that the target service stream distributes n target burst volumes within each orchestration period, denoted as burst_1, burst_2, ..., burst_n. A specific burst volume arrives at an ingress port of the head node H, passes an intra-node forwarding delay d_f, and then arrives at an egress port (link-a). There is a fixed offset relationship between the moment when the burst volume arrives at the egress port and the orchestration period of the egress port. For example, when a burst volume burst_i arrives at the egress port, an ongoing sending timeslot of the egress port is y, and a remaining time until the end of timeslot y is remaining_y.

Then, in the case where the difference value between the residence delay budget value and the residence delay evaluated value is less than the preset threshold, and where the number of offset timeslots, relative to the ongoing sending timeslot of the target node, of the target timeslot is less than the first number of timeslots, the outgoing timeslot reserved by the head node H for burst_i is offset by O (≥1) timeslots after its corresponding ongoing sending timeslot y, that is, the sequence number of the first target outgoing timeslot is (y+O)%N, where N is the first number of timeslots contained in the orchestration period, and % is a modulo operator.

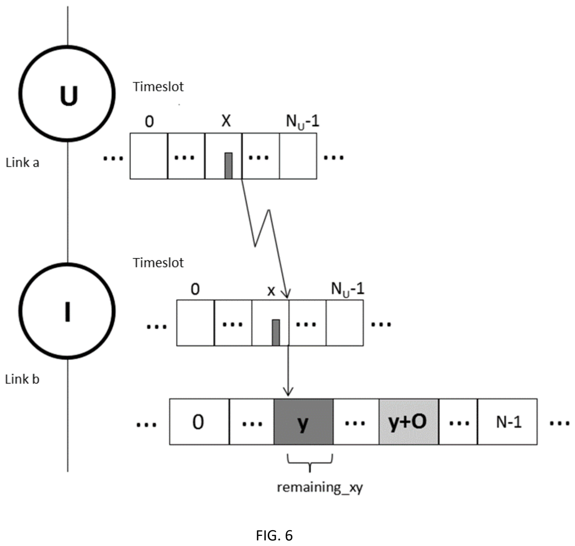

FIG. 6 shows a schematic diagram of a timeslot mapping relationship between two adjacent upstream and downstream nodes provided by embodiments of the present application. As shown in the figure, when a target node is an intermediate node I, the intermediate node I of a path reserves a target timeslot for each burst volume contained in a target service stream within an orchestration period upon receiving the target service stream sent by an upstream node U. Similarly, a service burst interval is equal to the length of the orchestration period of the intermediate node I after being extended, so that the intermediate node I receives the same target service stream within each orchestration period. In the figure, assuming that the upstream node U sends a burst volume burst_i in its outgoing timeslot x, and a mapping relationship between the outgoing timeslot x of an egress port link-a of the upstream node U and an ongoing sending timeslot y of an egress port link-b of the intermediate node I may be obtained. This mapping relationship refers to that when the end of the outgoing timeslot x of the upstream node U arrives at an ingress port of the intermediate node I, passes through an intra-node forwarding delay d_f, and then arrives at the egress port (link-b), the ongoing sending timeslot of the egress port is y, and a remaining time until the end of timeslot y is remaining_xy.

Then, in a case where the a difference value between a residence delay budget value and a residence delay evaluated value is less than a preset threshold, and where the number of offset timeslots, relative to the ongoing sending timeslot of the target node, of the target timeslot is less than the first number of timeslots, the outgoing timeslot reserved by the intermediate node I for burst_i is offset by O (≥1) timeslots after its corresponding ongoing sending timeslot y, that is, the sequence number of the first target outgoing timeslot is (y+O)%N, where N is the number of timeslots contained in the orchestration period, and % is a modulo operator.

According to the above timeslot resource reservation process, when the target burst volume corresponding to the first target outgoing timeslot (z) arrives at the egress port of node R1, the first ongoing sending timeslot (y) in the orchestration period of the egress port is the offset by O before the first target outgoing timeslot, and O<M. This means that the target burst volume does not randomly arrive at this node, but strictly follows the time so that when the target burst volume arrives at the egress port, the target burst volume definitely falls into the first ongoing sending timeslot (y).

Next, it is demonstrated below that the target burst volume arriving at the egress port in the first ongoing sending timeslot (y) can be safely inserted into the corresponding queue in the scheduling period without causing overflowing of the queue. The demonstration process is as follows.

It is assumed that each timeslot in the orchestration period has a virtual queue, and the length of the virtual queue is an initial bit amount corresponding to that timeslot. For example, if a virtual queue corresponding to the first target outgoing timeslot (z) is queue-z, then a packet that can be inserted into queue-z can only come from the following burst volumes.

The burst volume that arrives at the egress port in the ongoing sending timeslot y=(z-M+1+N)%N, i.e., the first target outgoing timeslot (z) is reserved for this type of burst volume according to O=M-1.

Or, the burst volume that arrives at the egress port in the ongoing sending timeslot y=(z-M+2+N)%N, i.e., the first target outgoing timeslot (z) is reserved for this type of burst volume according to O=M-2, and so on.

Or, the burst volume that arrives at the egress port in the ongoing sending timeslot y=(z-1+N)%N, i.e., the first target outgoing timeslot (z) is reserved for this type of burst volume according to O=1.

The total reserved amount of all these burst volumes does not exceed the initial bit amount of the first target outgoing timeslot (z).

Then, when the ongoing sending timeslot becomes z, queue-z is sent and cleared completely. Afterwards, from timeslot z+1 until the last timeslot N-1 in the orchestration period, there are no more packet insertions in queue-z. Obviously, such virtual queue design greatly wastes resources. In fact, queue-z may be reused by a subsequent first target outgoing timeslot (z+M)%N.

That is: the burst volume that arrives at the egress port in the ongoing sending timeslot y=(z+1)%N, i.e., the first target outgoing timeslot (z+M)%N may be reserved for this type of burst volume according to O=M-1.

Or, the burst volume that arrives at the egress port in the ongoing sending timeslot y=(z+2)%N, i.e., the first target outgoing timeslot (z+M)%N is reserved for this type of burst volume according to O=M-2, and so on.

Or, the burst volume that arrives at the egress port in the ongoing sending timeslot y=(z+M-1)%N, i.e., the first target outgoing timeslot (z+M)%N is reserved for this type of burst volume according to O=1.

The total reserved amount of all these burst volumes does not exceed the initial bit amount of the first target outgoing timeslot (z+M).

It is not difficult to know that queue-z can be used by any target outgoing timeslot (z+k*M)%N, where k is a non-negative integer. By observing (z+k*M)%N, it can be seen that the minimum z satisfies 0≤z<M. That is, the entire orchestration period actually only requires M queues to store the packet. These M queues are queues correspond to the M timeslots in the scheduling period. That is to say, the minimum z (satisfying 0≤z<M) is the sequence number of the timeslots in the scheduling period, and the target outgoing timeslot (z+k*M)%N is the sequence number of the timeslots in the orchestration period. The latter may obtain the former by taking the modulus of M, and then the queue corresponding to the former may be accessed. In short, the reason why one queue can store the packets from multiple target outgoing timeslots without being overflowed is, known from the above analysis, that the packets stored in the queue before M timeslots have already been sent.

From the above demonstration process, it can be seen that by using the method provided in the embodiments of the present application, in a case where the length of the orchestration period is much greater than the length of the scheduling period, there are still very few queues maintained on the target node, which can significantly reduce the buffer requirements of the target node, reduce the possibility of network congestion, and improve the forwarding efficiency of the packet.

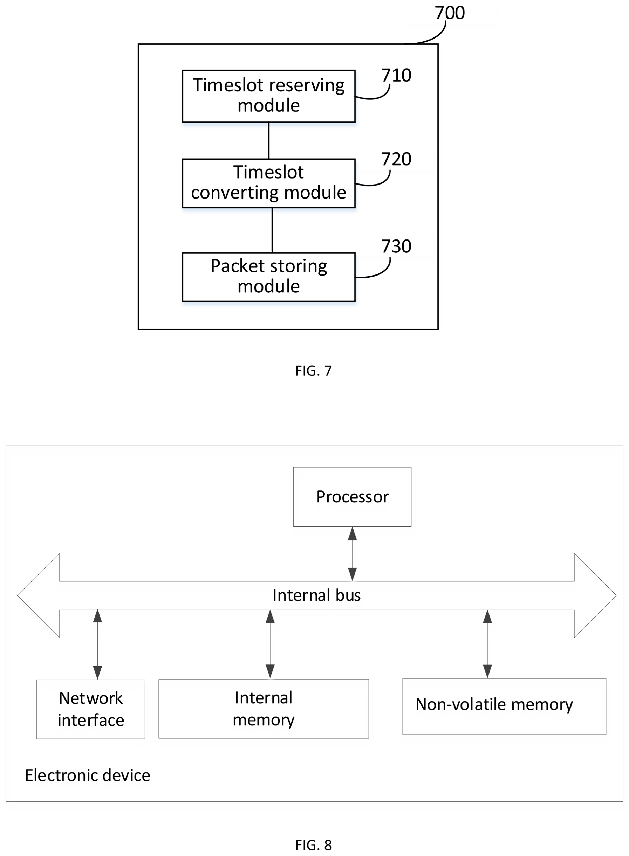

FIG. 7 shows a schematic structural diagram of a target node provided by embodiments of the present application. As shown in the figure, the target node 700 includes: a timeslot reserving module 710, configured to reserve a first target outgoing timeslot for a target service within an orchestration period, wherein the number of offset timeslots, relative to an ongoing sending timeslot of the target node, of the first target outgoing timeslot is less than the first number of timeslots contained in a scheduling period; a timeslot converting module 720, configured to convert the first target outgoing timeslot into a second target outgoing timeslot in the scheduling period based on a preset conversion strategy after receiving a forwarding packet of a target service stream; and a packet storing module 730, configured to store the forwarding packet in a to-be-sent queue corresponding to the second target outgoing timeslot for sending.

In a possible implementation, the timeslot converting module 720 includes: a timeslot acquiring unit, configured to acquire the first target outgoing timeslot corresponding to the forwarding packet in a case of receiving the forwarding packet of the target service stream; and a timeslot converting unit, configured to convert the first target outgoing timeslot into the second target outgoing timeslot in the scheduling period based on the preset conversion strategy.

In a possible implementation, when being configured to acquire the first target outgoing timeslot corresponding to the forwarding packet, the timeslot acquiring unit is configured to: determine, based on a timeslot sequence number carried by the forwarding packet, the first target outgoing timeslot reserved by the target node for the target service stream within the orchestration period, wherein the timeslot sequence number corresponds to the first target outgoing timeslot.

In a possible implementation, when being configured to acquire the first target outgoing timeslot corresponding to the forwarding packet, the timeslot acquiring unit is configured to: determine an outgoing timeslot corresponding to the forwarding packet based on a pre-stored packet forwarding table entry; and determine the outgoing timeslot corresponding to the forwarding packet as the first target outgoing timeslot reserved by the target node for the target service stream within the orchestration period.

The preset conversion strategy includes: in a case where the second number of timeslots contained in the orchestration period is an integer multiple of the first number of timeslots contained in the scheduling period, the second target outgoing timeslot is obtained by the first target outgoing timeslot modulo the first number of timeslots.

In a possible implementation, the timeslot reserving module 710 includes: an information acquiring unit, configured to acquire timeslot resource information of the target node within the orchestration period, and the first number of timeslots contained in the scheduling period of the target node; a determining unit, configured to reserve a target timeslot for the target service and determine a residence delay evaluated value corresponding to the target node based on a predetermined residence delay budget value corresponding to the target node, and the timeslot resource information; and a reserving unit, configured to determine the target timeslot as the first target outgoing timeslot reserved by the target node for the target service within the orchestration period in a case where a difference value between the residence delay budget value and the residence delay evaluated value is less than a preset threshold, and where the number of offset timeslots, relative to the ongoing sending timeslot of the target node, of the target timeslot is less than the first number of timeslots,, where the ongoing sending timeslot is used for indicating a timeslot in a sending state on an egress port of the target node.

In a possible implementation, when being configured to acquire the timeslot resource information of the target node within the orchestration period, and the first number of timeslots contained in the scheduling period of the target node, the information acquiring unit is configured to: announce the timeslot resource information of the target node within the orchestration period and length information of the scheduling period via an extended network protocol, wherein the length information is used for indicating the first number of timeslots contained in the scheduling period or the length of the scheduling period.

FIG. 8 shows a schematic structural diagram of hardware of an electronic device provided by embodiments of the present application. Referring to the figure, at the hardware level, the electronic device includes a processor, optionally an internal bus, a network interface, and a memory. The memory may include an internal memory such as a high-speed random-access memory (RAM), or a non-volatile memory such as at least one disk memory. The electronic device may also include hardware required for other services.

The processor, the network interface, and the memory may be interconnected by the internal bus, which may be an industry standard architecture (ISA) bus, a peripheral component interconnect (PCI) bus, or an extended industry standard architecture (EISA) bus, among others. The bus may be divided into an address bus, a data bus, a control bus, and the like. For ease of illustration, the bus is represented by only one bi-directional arrow in the figure, but it does not indicate only one bus or one type of bus.

The memory is configured to store a program. In some cases, the program may include a program code, and the program code includes computer operating instructions. The memory may include an internal memory and a non-volatile memory, and provides instructions and data to the processor.

The processor reads a corresponding computer program from the non-volatile memory into the internal memory and then runs the computer program to form an apparatus for locating a target user at a logical level. The processor executes the program stored in the memory, and specifically performs the method disclosed in the embodiment shown in FIG. 1 and achieves the functions and beneficial effects of various methods described in the foregoing method embodiments, which will not be repeated here.

The above method disclosed in the embodiment shown in FIG. 1 of the present application may be applied to the processor or implemented by the processor. The processor may be an integrated circuit chip having signal processing capabilities. During an implementation process, all the steps of the above method may be completed by an integrated logic circuit of hardware or an instruction in the form of software in the processor. The above processor may be a general-purpose processor, including a central processing unit (CPU), a network processor (NP) and the like. The processor may also be a digital signal processor (DSP), an application specific integrated circuit (ASIC), a field-programmable gate array (FPGA) or other programmable logic devices, discrete gates or transistor logic devices, and discrete hardware components. The various methods, steps, and logic block diagrams disclosed in the embodiments of the present application may be implemented or performed. The general-purpose processor may be a microprocessor, or the processor may also be any conventional processor, etc. The steps of the method disclosed in conjunction with the embodiments of the present application may be directly embodied to be executed and completed by a hardware decoding processor, or may be executed and completed through a combination of hardware and software modules in the decoding processor. The software module may be located in a mature storage medium in the art, such as a random access memory, a flash memory, a read-only memory, a programmable read-only memory, an electrically erasable programmable memory, and a register. The storage medium is located in the memory. The processor reads information in the memory and completes the steps of the above method in combination with hardware thereof.

The electronic device can also perform the methods described in the foregoing method embodiments, and achieve the functions and beneficial effects of the methods described in the foregoing method embodiments, which will not be repeated here.

Certainly, in addition to the software implementations, the electronic device of the present application does not exclude other implementations, such as logic devices or combinations of software and hardware, that is, an execution body of the following process flows is not limited to each logic unit, but may be hardware or logic devices.

An embodiment of the present application further proposes a computer-readable storage medium. The computer-readable storage medium stores one or more programs. The one or more programs, when executed by an electronic device including a plurality of applications, cause the electronic device to perform the methods disclosed in the embodiment shown in FIG. 1 and to achieve the functions and beneficial effects of the methods described in the foregoing method embodiments, which will not be repeated here.

The computer-readable storage medium includes a read-only memory (ROM), a random access memory (RAM), a magnetic disk or an optical disk, etc.

Further, an embodiment of the present application further provides a computer program product. The computer program product includes a computer program stored on a non-transitory computer-readable storage medium, the computer program includes a program instruction, and the program instruction, when executed by a computer, implements the following flow: the methods disclosed in the embodiment shown in FIG. 1, and achieves the functions and beneficial effects of the methods described in the foregoing method embodiments, which will not be repeated here.

In total, the above is merely preferred embodiments of the present application and is not intended to limit the protection scope of the present application. Any modification, equivalent replacement, improvement and the like made within the spirit and principle of the present application shall all be contained in the scope of protection of the present application.

The system, apparatus, module or unit illustrated in the above embodiments may be specifically embodied by a computer chip or entity, or by a product having a certain function. A typical implementation device is a computer. In particular, the computer may be, for example, a personal computer, a laptop computer, a cellular phone, a camera phone, a smart phone, a personal digital assistant, a media player, a navigation device, an email device, a game console, a tablet computer, a wearable device, or a combination of any of these devices.

The computer-readable medium includes permanent and non-permanent, and removable and non-removable media, and may achieve information storage through any method or technology. Information can be computer-readable instructions, data structures, modules of programs, or other data. Examples of the computer storage medium include but are not limited to a phase-change random access memory (PRAM), a static random access memory (SRAM), a dynamic random access memory (DRAM), other types of random access memories (RAMs), a read only memory (ROM), an electrically erasable programmable read only memory (EEPROM), a flash memory or other memory technologies, a compact disc-read only memory (CD-ROM), a digital video disc (DVD) or other optical storage and magnetic cassette tape, magnetic-tape magnetic-disk storage or other magnetic storage devices or any other non-transmission media, and may store information that can be accessed by a computing device. According to the definition herein, the computer-readable medium does not include transitory media, such as modulated data signals and carriers.

It should further be noted that, the terms "include", "comprise" or any other variants thereof are intended to cover non-exclusive inclusion, so that a process, method, article or apparatus including a series of elements not only includes those elements, but also includes other elements not clearly listed, or also includes elements inherent to this process, method, article or apparatus. Without further limitations, the elements limited by a statement "including one..." do not exclude the existence of other identical elements in the process, method, commodity or device that includes the said elements.

The various embodiments in this specification are described in a progressive manner, and the same or similar parts between the various embodiments can be referred to each other. Each embodiment focuses on contents different from other embodiments. In particular, as for the system embodiments, as they are basically similar to the method embodiments, the description is relatively simple. As for related parts, please refer to part of the description in the method embodiments.

## Claims

1. A packet sending method, comprising:
reserving, by a target node, a first target outgoing timeslot for a target service within an orchestration period, wherein a number of offset timeslots, relative to an ongoing sending timeslot of the target node, of the first target outgoing timeslot is less than a first number of timeslots comprised in a scheduling period, and the target node is any node on a target path of a target service stream;
converting, by the target node, the first target outgoing timeslot into a second target outgoing timeslot in the scheduling period based on a preset conversion strategy after receiving a forwarding packet of the target service stream; and
storing, by the target node, the forwarding packet in a to-be-sent queue corresponding to the second target outgoing timeslot for sending.

2. The method according to claim 1, wherein converting, by the target node, the first target outgoing timeslot into the second target outgoing timeslot in the scheduling period based on the preset conversion strategy after receiving the forwarding packet of the target service stream comprises:
acquiring, by the target node, the first target outgoing timeslot corresponding to the forwarding packet in a case of receiving the forwarding packet of the target service stream; and
converting the first target outgoing timeslot into the second target outgoing timeslot in the scheduling period based on the preset conversion strategy.

3. The method according to claim 2, wherein acquiring the first target outgoing timeslot corresponding to the forwarding packet comprises:
determining, based on a timeslot sequence number carried by the forwarding packet, the first target outgoing timeslot reserved by the target node for the target service stream within the orchestration period, wherein the timeslot sequence number corresponds to the first target outgoing timeslot.

4. The method according to claim 2, wherein acquiring the first target outgoing timeslot corresponding to the forwarding packet comprises:
determining an outgoing timeslot corresponding to the forwarding packet based on a pre-stored packet forwarding table entry; and
determining the outgoing timeslot corresponding to the forwarding packet as the first target outgoing timeslot reserved by the target node for the target service stream within the orchestration period.

5. The method according to claim 1, wherein the preset conversion strategy comprises:
in a case where a second number of timeslots comprised in the orchestration period is an integer multiple of the first number of timeslots comprised in the scheduling period, obtaining the second target outgoing timeslot by the first target outgoing timeslot modulo the first number of timeslots.

6. The method according to claim 1, wherein reserving, by the target node, the first target outgoing timeslot for the target service within the orchestration period comprises:
acquiring timeslot resource information of the target node within the orchestration period, and the first number of timeslots comprised in the scheduling period of the target node;
reserving a target timeslot for the target service and determining a residence delay evaluated value corresponding to the target node based on a predetermined residence delay budget value corresponding to the target node, and the timeslot resource information; and
determining the target timeslot as the first target outgoing timeslot reserved by the target node for the target service within the orchestration period in a case where a difference value between the residence delay budget value and the residence delay evaluated value is less than a preset threshold, and where a number of offset timeslots, relative to the ongoing sending timeslot of the target node, of the target timeslot is less than the first number of timeslots, wherein the ongoing sending timeslot is used for indicating a timeslot in a sending state on an egress port of the target node.

7. The method according to claim 6, wherein acquiring the timeslot resource information of the target node within the orchestration period, and the first number of timeslots comprised in the scheduling period of the target node comprises:
announcing the timeslot resource information of the target node within the orchestration period and length information of the scheduling period via an extended network protocol, wherein the length information is used for indicating the first number of timeslots comprised in the scheduling period or a length of the scheduling period.

8. A target node, the target node being any node on a target path of a target service stream, comprising:
a timeslot reserving module, configured to reserve a first target outgoing timeslot for a target service within an orchestration period, wherein a number of offset timeslots, relative to an ongoing sending timeslot of the target node, of the first target outgoing timeslot is less than a first number of timeslots comprised in a scheduling period;
a timeslot converting module, configured to convert the first target outgoing timeslot into a second target outgoing timeslot in the scheduling period based on a preset conversion strategy after receiving a forwarding packet of the target service stream; and
a packet storing module, configured to store the forwarding packet in a to-be-sent queue corresponding to the second target outgoing timeslot for sending.

9. An electronic device, comprising a processor and a memory, wherein the memory stores a program or instruction able to run on the processor, and the program or the instruction, when executed by the processor, implements the steps of the method according to any one of claims 1 to 7.

10. A readable storage medium, having a program or instruction stored thereon, wherein the program or the instruction, when executed by a processor, implements the steps of the method according to any one of claims 1 to 7.
